# EUROPÄISCHE PATENTSCHRIFT

(11) **EP 2 883 787 B1**
(45) Veröffentlichungstag und Bekanntmachung des Hinweises auf die Patenterteilung: **12.06.2019**
(21) Anmeldenummer: 13196994.1
(22) Anmeldetag: 12.12.2013
(51) Int. Cl.: B64C 3/48

(54) **Antriebsmechanismus für eine verformbare Tragflächenvorderkante**
Drive mechanism for a deformable wing leading edge structure
Mécanisme d'entraînement pour une structure de bord d'attaque déformable d'une aile

(43) Veröffentlichungstag der Anmeldung: 17.06.2015
(73) Patentinhaber: Airbus Defence and Space GmbH, 85521 Ottobrunn (DE)
(72) Erfinder: Kirn, Johannes, 80686 München (DE)
(74) Vertreter: Kastel, Stefan

(56) Entgegenhaltungen:
- EP-A2- 1 637 450
- WO-A2-02/47976
- DE-A1- 2 026 054
- US-A1- 2012 091 283

## Beschreibung

Die Erfindung betrifft ein verformbares Strukturbauteil für einen fluiddynamischen, insbesondere aerodynamischen, Körper eines Fahrzeugs, insbesondere Luftfahrzeugs, nach dem Oberbegriff des Anspruchs 1. Weiter betrifft die Erfindung einen mit einem derartigen verformbaren Strukturbauteil versehenen fluiddynamischen, insbesondere aerodynamischen, Strömungskörper eines Fahrzeugs, wie z.B. einen Flügel oder dgl. eines Luftfahrzeugs. Schließlich betrifft die Erfindung eine Auftriebshilfe für ein Flugzeug.

Aus der WO 02/47976 A ist als Strukturbauteil ein aerodynamischer Flügel mit variabler Wölbung bekannt, bei dem zur Veränderung der Wölbung die Relativlage zumindest zweier Home zwischen einer anzusehenden Beplankung verändert wird. Hierzu sind wenigstens zwei Antriebseinheiten vorgesehen, die jeweils eine in ihrer Länge über einen Verstellmechanismus einstellbare Streben-Anordnung umfasst.

Aus der EP 1 637 450 A2 ist ein Tragflügel eines Flugzeugs mit veränderbarem Profil offenbart, bei dem zur Veränderung einer Wölbung mehrere Wirbelelemente mit in ihrer Relativlage durch Hebelelemente einstellbar sind. Bei einer Ausführungsform ist ein Schubaktuator für die Hebelelemente vorgesehen.

Aus der DE 20 26 054 A1 ist ein Tragflügel mit flexibel veränderbarer Vorderkante bekannt, wobei ein verschwenkbarer Arm zur Bewegung der Vorderkante vorgesehen ist, der über einen Schubzylinder betätigt werden kann.

Aus der US 2012/0091283 A1 ist ein Antrieb für Auftriebklappen an Vorderflügeln bekannt, bei dem eine Linearbewegung einer Linearbewegungseinheit in eine Vor- oder Rückbewegung der Auftriebklappe umgelenkt wird.

Ein verformbares Strukturbauteil mit Antriebsmechanismus zum Antreiben der Verformung ist beispielsweise in dem Forschungsprojekt "SmartLED" (LuFo4) sowie in dem Forschungsprojekt "SADE(EU)" entwickelt und untersucht worden. Nähere Einzelheiten zu dem Projekt "SADE" sowie einen Nachweis für Veröffentlichungen hierzu sind unter der Webseite www.sade-projekt.eu/index.html abrufbar.

Adaptive Strukturen der in dem Projekt SADE untersuchten Art sind besonders geeignet zur Verformung von aerodynamischen Flächen von Luftfahrzeugen, wie z.B. Flügeln, Flossen oder Rotorblättern. Insbesondere bei Flugzeugflügeln ist es vorteilhaft, als Auftriebshilfe anstatt konventionellen Vorflügeln sogenannte Kippnasen (Englisch: Droop Leading Edge Flap oder Droop Nose) zu verwenden. Bei der im Folgenden "Droop Nose" bezeichneten Kippnase wird die komplette Flügelnase nach unten abgewinkelt. Dadurch erhöht sich die Flügelwölbung. Eine Ausführung einer Kippnase ist z.B. beim Airbus A380 als sogenannte Droop-Nose Device am Innenflügel realisiert.

Konventionelle Vorflügel sind ungeeignet für laminare Umströmung und darüber hinaus eine dominierende Lärmquelle. Beim Airbus A380 ist dagegen eine Droop-Nose Device durch eine Starrkörperbewegung realisiert, was bereits größere Vorteile gegenüber konventionellen Vorflügeln bedingt.

Die Untersuchungen des SADE-Projekts zielen darauf ab, adaptive Strukturen für aerodynamische Körper zu erreichen, mit denen gegenüber bekannten Droop-Nose-Vorrichtungen größere geometrische Freiheiten, eine Verringerung von lokalen Krümmungen und Belastungen und mehr laminare Umströmungen erreichbar sind.

Bei früheren Kippnase-Lösungen wird die gesamte Vordernase des Flügels insgesamt als Starrkörper bewegt. Bei dem SADE-Projekt geht man jedoch von dem Ansatz aus, die Primärstruktur zu verformen. Insoweit kann man ohne Spalte mit einer geschlossenen aerodynamischen Fläche arbeiten, große lokale Krümmungsradien vermeiden und aufgrund dessen auch eine verbesserte cp-Verteilung und eine geringere Ablösungstendenz erreichen.

Die Erfindung ist somit in bevorzugter Ausgestaltung auf ein Antriebskonzept für ein verformbares Strukturbauteil mit einer großflächig zu verformenden Haut und gerichtet, welches Strukturbauteil durch einen Antriebsmechanismus verformbar ist, um eine adaptive Struktur zu schaffen.

Bei bisherigen verformbaren, adaptiven, dünnwandigen Strukturen, wie z.B. für eine Droop Nose, erfolgt die Krafteinleitung bevorzugt mittels einer Hilfsstruktur (z.B. Omegastringer), um lokale Spannungsüberhöhungen zu reduzieren und die Verformbarkeit der Primärstruktur nicht zu behindern. An dieser Hilfsstruktur werden Beschläge angebracht, um hierüber eine beweglich gelagerte Krafteinleitung (z.B. via Streben und Gelenkkopf) zu ermöglichen. Die Streben sitzen bei bisherigen Lösungen jeweils an einem Haupthebel, wobei jeder Haupthebel mit einem Stellmotor versehen ist, um den Haupthebel zu drehen.

Will man jedoch einen Flügel oder einen sonstigen fluiddynamischen Körper für ein Fahrzeug, wie insbesondere einen aerodynamischen Körper für ein Luftfahrzeug, schaffen, der laminar umströmt werden kann, dann wäre eine möglichst schlanke Struktur - z.B. ein schlanker Laminar-Flügel - vorteilhaft. Bei besonders schlanken Laminar-Flügeln sind die bisherigen Lösungen bei der gegebenen Geometrie aus Platzmangel nicht verwendbar; damit wäre die Funktionalität der benötigten Kinematik nicht gegeben.

Der Erfindung liegt die Aufgabe zugrunde, ein Antriebskonzept für eine Kinematik einer adaptiven Struktur mit geringem Platzbedarf für eine große Deformation unter großen Lasten bei verringerter Komplexität des Antriebes zu schaffen.

Diese Aufgabe wird durch ein Strukturbauteil nach Anspruch 1 gelöst. Vorteilhafte Verwendungen des Strukturbauteils sind Gegenstand der Nebenansprüche.

Vorteilhafte Ausgestaltungen der Erfindung sind Gegenstand der Unteransprüche.

Gemäß einem Aspekt schafft die Erfindung ein verformbares Strukturbauteil eines fluiddynamischen, insbesondere aerodynamischen, Strömungskörper. Das erfindungsgemäße Strukurbauteil hat eine zu verformende Haut und eine drehbeweglich gelagerte Lasteinleitungseinrichtung zur Einleitung der Verformungskraft in die Haut. Weiter hat das Strukturbauteil einen Antriebsmechanismus zum Erzeugen der Verformungskraft. Der Antriebsmechanismus umfasst eine linear beweglich angetriebene Linearbewegungseinheit und ein Getriebeelement zum Umsetzen einer Linearbewegung der Linearbewegungseinheit in eine Drehbewegung der Lasteinleiteinrichtung.

Das Getriebelement weist einen Umsetzhebel zum Umsetzen der Linearbewegung in eine rotatorische Bewegung auf.

Es ist weiter vorgesehen, dass der Umsetzhebel an der Linearbewegungseinheit und an der Lasteinleiteinrichtung angreift.

Es ist bevorzugt, dass der Umsetzhebel als Teil eines Kniehebelmechanismus ausgebildet ist.

Es ist vorgesehen, dass der Umsetzhebel gelenkig so gelagert ist, dass er sich sowohl in einer Ebene bewegen kann als auch sich aus der Ebene heraus bewegen kann, indem der Umsetzhebel an der Linearbewegungseinheit mehrachsig gelenkig gelagert ist.

Gemäß einer Alternative ist vorgesehen, dass der Umsetzhebel an der Lasteinleitungseinrichtung mehrachsig gelenkig gelagert ist.

Gemäß einer anderen Alternative ist vorgesehen, dass der Umsetzhebel an der Linearbewegungseinheit einachsig gelenkig gelagert ist und das Linearbewegungselement um eine im Wesentlichen in Bewegungsrichtung des Linearbewegungselement verlaufende Verdrehachse drehbar gelagert ist.

Es ist bevorzugt, dass die Linearbewegungseinheit derart ausgebildet und angeordnet ist, dass die Bewegungsrichtung der Linearbewegungseinheit zumindest mit einer Bewegungsrichtungskomponente, vorzugsweise mit ihrer größten Bewegungsrichtungskomponente oder insgesamt parallel zu einer Drehachse der Drehbewegung der Lasteinleiteinrichtung verläuft.

Es ist bevorzugt, dass die Linearbewegungseinheit eine in ihrer Längsrichtung verschiebbar gelagerte Antriebsstange aufweist.

Es ist bevorzugt, dass die Linearbewegungseinheit mehrere in Bewegungsrichtung aufeinanderfolgende gelenkig aneinander gekoppelte Stangenelemente aufweist.

Es ist bevorzugt, dass die Haut an ihren Endbereichen ortsfest befestigt ist und der Antriebsmechanismus dazu ausgebildet ist, einen zwischen den Endbereichen gekrümmt verlaufenden Mittelbereich der Haut zu verformen.

Gemäß einem weiteren Aspekt schafft die Erfindung einen mit einem derartigen, mit dem Antriebsmechanismus angetrieben verformbaren Strukturbauteil versehenen fluiddynamischen, insbesondere aerodynamischen, Strömungskörper, bei dem ein Endkantenbereich durch das verformbare Strukturbauteil gebildet ist.

Gemäß einem weiteren Aspekt schafft die Erfindung eine mit einem derartigen, mit dem Antriebsmechanismus angetrieben verformbaren Strukturbauteil gebildete, als Droopnose-Vorrichtung ausgebildete Auftriebshilfe für ein Flugzeug.

Ziel einer bevorzugten Ausgestaltung der Erfindung ist es, eine Vorderkante eines Laminarprofils (wie z.B. eine Flügelvorderkante eines Laminar-Flügels) adaptiv verformbar zu gestalten. Hierzu wird ein Antriebskonzept bzw. eine Kinematik benötigt. Gerade bei Laminarprofilen gibt es aber einen mangelnden Bauraum, der nur eine begrenzte Anzahl von Aktuatoren zulässt. Zusätzlich sind die zu bewältigenden Lasten sehr hoch. Eine klassische rotatorisch angetriebene Kinematik ist bei sehr schlanken zu verformenden Laminarprofilen nicht machbar. Insbesondere tritt bei der bevorzugten Verwendbarkeit als Droop-Nose-Auftriebshilfe an Vorderkanten von Flügeln von Luftfahrzeugen eine hohe Last bei nur geringem zur Verfügung stehenden Bauraum auf.

Ein weiteres Ziel war, eine Lösung zur Reduktion der Komplexität zu finden.

Bisherige, bei dem SADE-Projekt untersuchte rotatorische Kinematiken sind bei sehr schlanken Laminarprofilen mit geringem Bauraum nicht anwendbar, wenngleich sie auch in ihrem Verwendungszweck eine ähnliche Lösung - Verformung einer Flügelvorderkante - bieten. Die bisher ins Auge gefasste Lösung ist deutlich komplexer und geometrisch weniger flexibel als das hier vorgestellte Antriebskonzept.

Gemäß einer besonders bevorzugten Ausgestaltung der Erfindung wird als Antriebskonzept eine lineare Anbindung an die Kinematik vorgeschlagen, bei dem durch gezielte Positionierung von Hebeln die Linearbewegung in eine rotatorische Bewegung umgesetzt wird. Dazu wird ein Hebel so gelenkig gelagert, dass er sich sowohl in der Ebene als auch aus ihr heraus bewegen kann.

Generell lässt sich durch das erfindungsgemäße Konzept Bauraum gewinnen und die Komplexität stark reduzieren. Weitere Vorteile sind eine mögliche Gewichtsreduktion, eine hohe Stabilität und eine größere Ausfallsicherheit. Zusätzlich lassen sich durch das Antriebskonzept grundsätzlich beliebig viele Kinematikstationen gleichzeitig antreiben. Dadurch wird die Komplexität des Systems stark reduziert. Ein weiterer Vorteil ist, dass der oder die Aktuatoren beim minimalen und maximalen Kinematikausschlag lastfrei sein können, wodurch die Sicherheit des Systems erhöht wird.

Wie bei bisherigen verformbaren, adaptiven, dünnwandigen Strukturen, wie z.B. für eine Droop Nose, erfolgt auch bei bevorzugten Anwendungen der Erfindung die Krafteinleitung bevorzugt mittels einer Hilfsstruktur (z.B. Omegastringer), um lokale Spannungsüberhöhungen zu reduzieren und die Verformbarkeit der Primärstruktur nicht zu behindern. Bevorzugt werden an dieser Hilfsstruktur Beschläge angebracht, um hierüber eine beweglich gelagerte Krafteinleitung (z.B. via Streben und Gelenkkopf) zu ermöglichen. Die Streben sitzen vorzugsweise jeweils an einem von mehreren Haupthebeln. Mit dem erfindungsgemäßen Antriebskonzept lassen sich die Haupthebel jedoch viel einfacher und sicherer als bisher antreiben. Eine Linearbewegung einer Linearbewegungseinheit lässt sich leicht entlang einer Flügelkante oder einer sonstigen länglichen zu verformenden Struktur übertragen und an mehreren Stellen abgreifen, um so auch mehrere Haupthebel anzutreiben. Über einen Umsetzhebel lässt sich die Linearbewegung elegant und einfach und dennoch sicher und auch mit hohen Lasten und auch wartungsarm in eine Drehbewegung des jeweiligen Haupthebels umsetzen, wobei auch der Gewichtsaufwand gering ist.

Im Folgenden werden Ausführungsbeispiele der Erfindung anhand der beigefügten Zeichnungen näher erläutert. Dabei zeigen:
- Fig. 1: eine schematische Draufsicht auf ein Luftfahrzeug in Form eines Flugzeuges mit einer Droop Nose-Auftriebshilfe zum Darstellen eines Beispiels für adaptive Strukturen mit einem verformbaren Strukturbauteil und einem Antriebsmechanismus zum Antreiben einer Verformung;
- Fig. 2: einen Schnitt entlang der Linie II-II von Fig. 1 durch die adaptive Struktur und das verformbare Strukturbauteil;
- Fig. 3: eine perspektivische Ansicht einer Ausführungsform des Antriebsmechanimus in einer neutralen Position;
- Fig. 4: eine Ansicht wie in Fig. 3 des Antriebsmechanismus in einer Position für eine maximale Verformung;
- Fig. 5: eine weitere Ansicht des Antriebsmechanismus, wobei ein Befestigungsbeschlag für eine Lasteinleiteinrichtung zur besseren Darstellung weggelassen worden ist;
- Fig. 6: eine Darstellung vergleichbar der Fig. 5 mit beiden Befestigungsbeschlägen; und
- Fig. 7: eine weitere perspektivische Ansicht des Antriebsmechanismus.

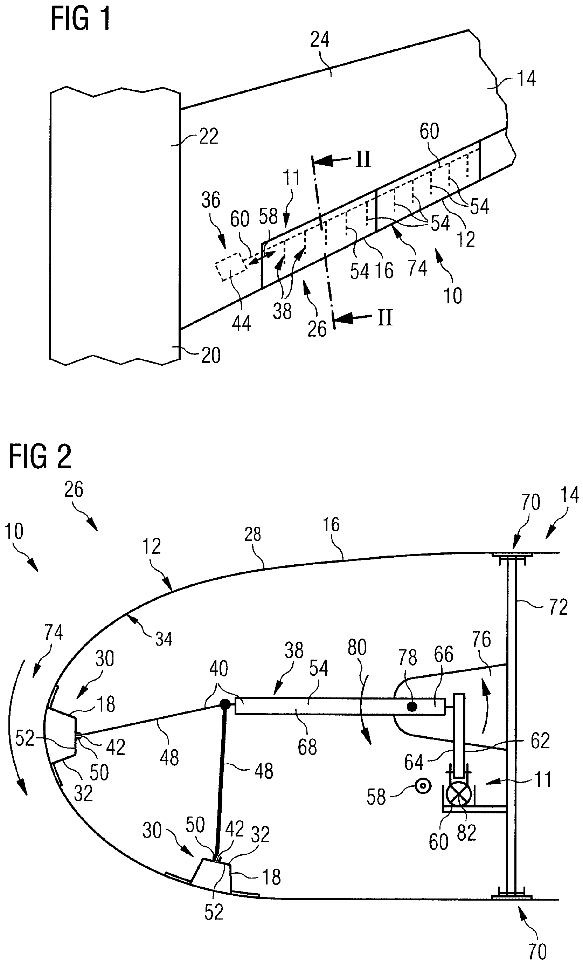

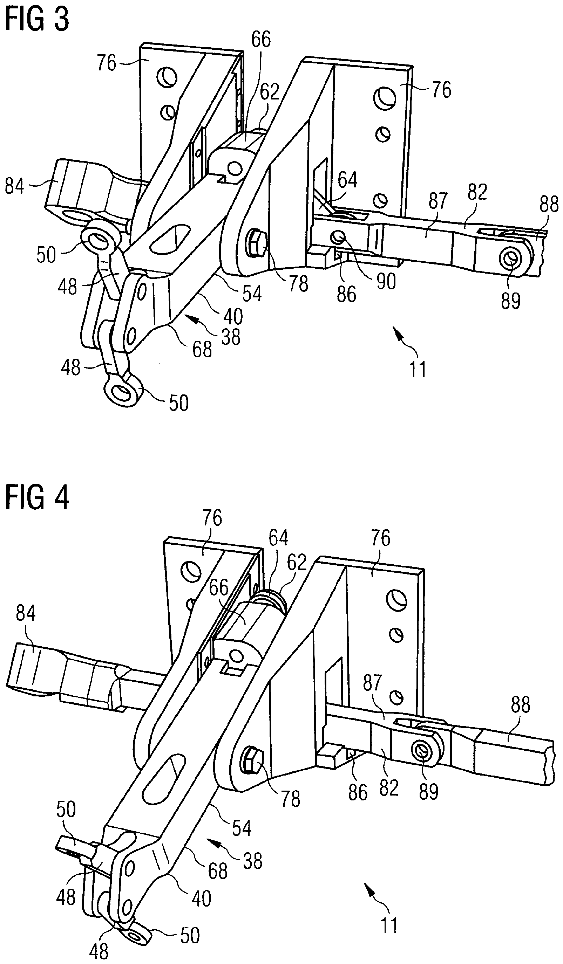

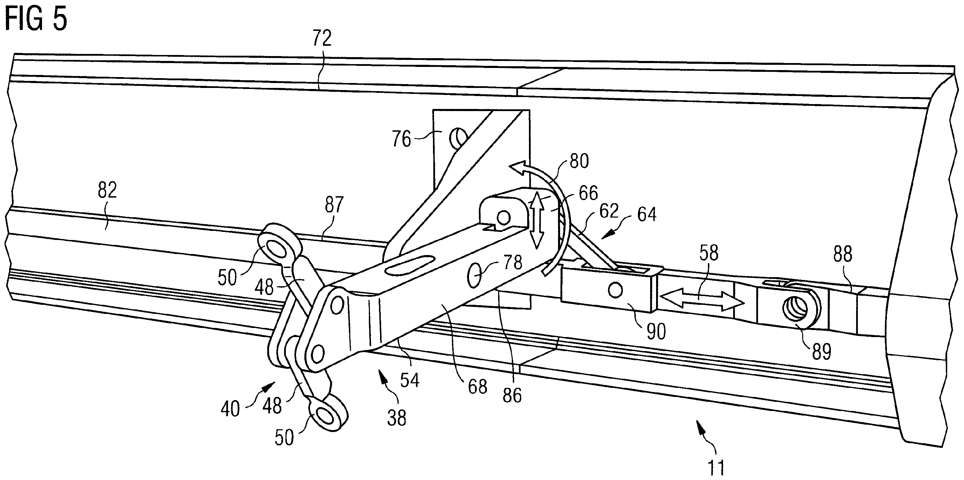

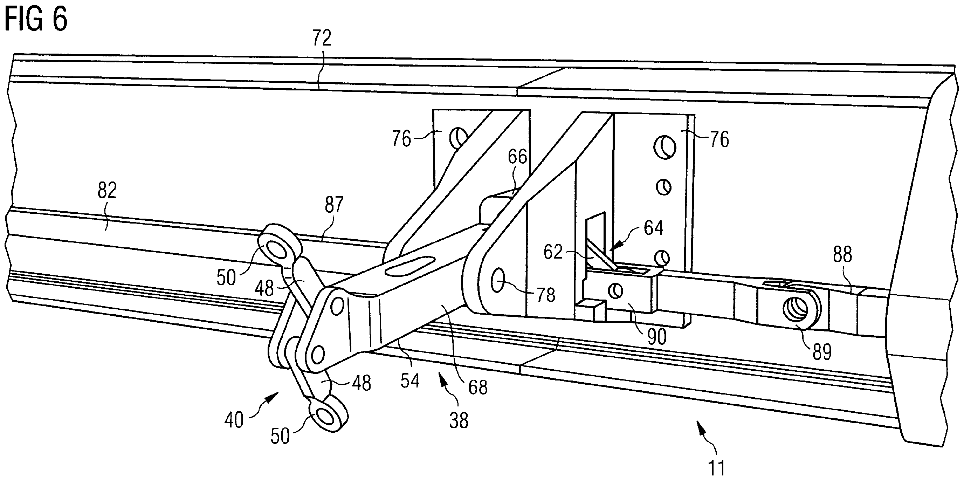

Im Folgenden wird anhand der Darstellungen der Fig. 1 und 2 ein Ausführungsbeispiel einer adaptiven dünnwandigen Struktur 10 mit einem verformbaren Strukturbauteil 12 am Beispiel eines fluiddynamischen Strömungskörpers - hier z.B. in Form eines aerodynamischen Strömungskörpers 14 mit verformbarer aerodynamischer Fläche - näher erläutert. Die Erfindung ist jedoch allgemein auf alle dünnwandigen adaptiven Struktur mit verformbaren Strukturbauteilen, die eine zu verformende Haut 16 und eine (z.B. indirekte) Lasteinleitung, z.B. über Versteifungsprofile 18, zum Verformen der Haut 16 aufweisen, anwendbar. Insbesondere wird im Folgenden ein Antriebsmechanismus 11 für die adaptive Struktur 10 näher erläutert. Anschließend wird ein Ausführungsbeispiel des Antriebsmechanismus 11 anhand der Darstellung der Fig. 3 bis 7 näher erläutert.

Als Beispiel für den fluiddynamischen und insbesondere aerodynamischen Strömungskörper 14 ist in Fig. 1 ein Luftfahrzeug 20, hier z.B. in Form eines Flugzeuges 22, gezeigt, wobei die Flügel 24 mit Droop-Nose-Auftriebshilfen 26 versehen sind, die durch die adaptive Struktur 10 realisiert werden.

In Fig. 2 ist eine Querschnittsdarstellung entlang der Linie II-II von Fig. 1 dargestellt. Die adaptive Struktur 10 weist demnach das verformbare Strukturbauteil 12 auf. Das verformbare Strukturbauteil 12 ist als Teil des aerodynamischen Strömungskörpers 14 ausgebildet und weist die Haut 16 auf, die zur Anpassung des aerodynamischen Strömungskörpers 14 an eine gewünschte aerodynamische Wirkung insgesamt großflächig zu verformen ist.

Demnach weist die adaptive Struktur 10 eine zu verformende Primärstruktur 28 auf, die möglichst ungestört verformt werden soll, wobei keine Spalte und keine überhöhten Krümmungsradien an der Oberseite entstehen sollen. Hierzu wird die Verformungskraft über eine Hilfsstruktur 30 nur mittelbar in die Primärstruktur 28 eingeleitet.

Die Hilfsstruktur 30 weist mehrere Versteifungsprofile 18 auf. Zum Beispiel sind die Versteifungsprofile 18 durch Omegastringer 32 gebildet. Auch andere Versteifungsprofilformen sind möglich; bevorzugt sind jedoch Hohlprofile mit einer auf einer größeren Fläche verteilten Befestigung zu der Haut 16.

Demnach sind die Versteifungsprofile 18 auf einer inneren Oberfläche 34 der zu verformenden Haut 16 befestigt.

Der Antriebsmechanismus 11 weist wenigstens einen Aktuator 36 zur Erzeugung einer gewünschten Verformungskraft auf. Der Antriebsmechanismus 11 ist über eine Lasteinleitungseinrichtung 38 zum Einleiten der Verformungslast mit den Versteifungsprofilen 18 verbunden.

Die Lasteinleitungseinrichtung 38 weist Lasteinleitungselemente 40 auf, die die Last an Angriffspunkten 42 - auch Angriffsstellen genannt - in die Versteifungsprofile 18 oder allgemeiner die Hilfsstruktur 30 einleiten.

Wie in Fig. 1 dargestellt ist der Aktuator 36 zum Erzeugen einer Linearbewegung ausgebildet. Z.B. weist der Aktuator 36 einen Stellmotor 44 auf, der über eine motorisch angetrieben Spindel (nicht dargestellt) eine Linearbewegung an dem Antriebsmechanismus 11 antreibt. In anderen Ausgestaltungen ist ein hydraulisch oder pneumatisch oder magnetisch oder sonst wie ausgebildeter Kolbenmechanismus als Aktuator 36 vorgesehen. Auch Linearmotoren oder ein Stellmotor mit einer Zahnstange usw. sind denkbar.

Der Antriebsmechanismus 11 treibt eine Drehbewegung an der Lasteinleitungseinrichtung 38 an, über die Kraft über Streben 48 mit Gelenkkopf 50 in als Beschläge 52 ausgebildete Lasteinleitungselemente 40 am Angriffspunkt 42 einleitet.

Der Antriebsmechanismus 11 ist zum Antreiben der Verformung der Haut 16 des verformbaren Strukturbauteils 12 des aerodynamischen Strömungskörpers 14 ausgebildet. Das Strukturbauteil 12 weist die zu verformende Haut 16 und die drehbeweglich gelagerte Lasteinleitungseinrichtung 38 zur Einleitung der Verformungskraft auf die Haut 16 auf.

Wie aus den Fig. 2 ersichtlich weist der Antriebsmechanismuss 11 weiter eine durch den Aktuator 36 linear beweglich angetriebene Linearbewegungseinheit 60 und ein Getriebeelement 62 zum Umsetzen einer Linearbewegung der Linearbewegungseinheit 60 in eine Drehbewegung der Lasteinleiteinrichtung 38 auf. Das Getriebeelement 62 ist insbesondere durch einen Umsetzhebel 64 gebildet, der einerseits an der Linearbewegungseinheit 60 und andererseits an der Lasteinleiteinrichtung 38 angelenkt ist.

Hierzu weist die Lasteinleiteinrichtung 38 einen Haupthebel 54 auf, der zweiarmig ausgebildet ist, wobei an einem ersten Arm 66 der als Getriebeelement 62 zum Umsetzen der Linearbewegung in eine Drehbewegung wirkende Umsetzhebel 64 angelenkt ist und an einem zweiten Arm 68 die Streben 48 mit den Gelenkköpfen 50 angreifen.

Der erste Arm 66 und der Umsetzhebel 64 bilden einen Kniehebelmechanismus, mit dem auch hohe Lasten übertragbar sind.

Die Versteifungsprofile 18 werden jeweils durch einen Omegastringer 32, gebildet, der sich in Längsrichtung des zu verformenden Strukturbauteils 12 erstreckt. Bei der in Fig. 1 dargestellten beispielhaften Verwendung der adaptiven Struktur 10 entspricht die Längsrichtung der Spannweitenrichtung. An mehreren beabstandeten Stellen sind an von Beschlägen 52 auf, von denen in den Figuren jeweils nur eine dargestellt ist.

Die Linearbewegungsrichtung 68 der Linearbewegungseinheit 60 verläuft parallel zu dieser Längsrichtung und mit wenigstens einer Richtungskompenente auch parallel zu der Drehachse der Drehbewegung der Lasteinleiteinrichtung, d.h. insbesondere der einzelnen Haupthebel 54.

Bei der gezeigten Ausführungsform einer zu verformenden Flügelkante ist die Linearbewegungsrichtung im Wesentlichen parallel zur Richtung der Flügelkante, also im Wesentlichen in Spannweitenrichtung gerichtet. Der Haupthebel 54 ist im Wesentlichen in Flugrichtung gerichtet, wobei seine Drehachse im Wesentlichen parallel zur Linearbewegungsrichtung 58 verläuft

Wie in Fig. 2 dargestellt, weist die Lasteinleitungseinrichtung 38 als Lasteinleitungselement 40 den Haupthebel 54 sowie daran am freien Ende angelenkte Streben 48 mit Gelenkkopf 50 zum Verbinden mit dem Beschlag 52 an den Omegastringern 32 auf.

Die Haut 16 ist an Endbereichen oder Übergangsbereichen 70, wo die verformbare Struktur 10 in eine feste Struktur des aerodynamischen Strömungskörpers 14 übergeht, ortsfest fixiert. Zum Beispiel ist die Haut 16 an diesen Übergangsbereichen 70 an einer Wandung 72 der Flügelstruktur befestigt. Von dem unteren Übergangsbereich zu dem oberen Übergangsbereich ist die Haut bogenförmig gekrümmt, um die Flügelvorderkante 74 zu bilden. Der gesamte gekrümmte Bereich der Haut 16 lässt sich insgesamt verformen.

Die Lasteinleitungseinrichtung 38 weist weiter einen Befestigungsbeschlag 76 auf, der ebenfalls ortsfest, z.B. an der Wandung 72 der Flügelstruktur, befestigt ist. An diesem Befestigungsbeschlag 76 ist die Drehachse 78 der rotatorischen Drehbewegung der Lasteinleitungseinrichtung 38 definiert.

Im Folgenden wird ein Ausführungsbeispiel des Antriebsmechanismus anhand der Darstellungen in den Fig. 3 bis 7 näher erläutert.

Die Linearbewegungseinheit 60 des Antriebsmechanismus 11 weist eine Antriebsstange 82 auf, die an einem Ende einen Aktuatoranschluss 84 zum Koppeln an ein Abtriebsglied des Aktuators 86 aufweist.

Die Antriebsstange 82 ist in Führungsschienen 86, die an dem Befestigungsbeschlag 76 angeordnet sein können, in Linearbewegungsrichtung 58 linear verschiebbar gelagert.

Die Antriebsstange 82 ist vorzugsweise in mehrere Stangenelemente 87, 88 aufgeteilt, die mittels eines Koppelgelenks 89 gelenkig aneinander gekoppelt sind, um eine Verbiegung des aerodynamischen Strömungskörpers 14, insbesondere eine Verbiegung des Flügels 24 auszugleichen.

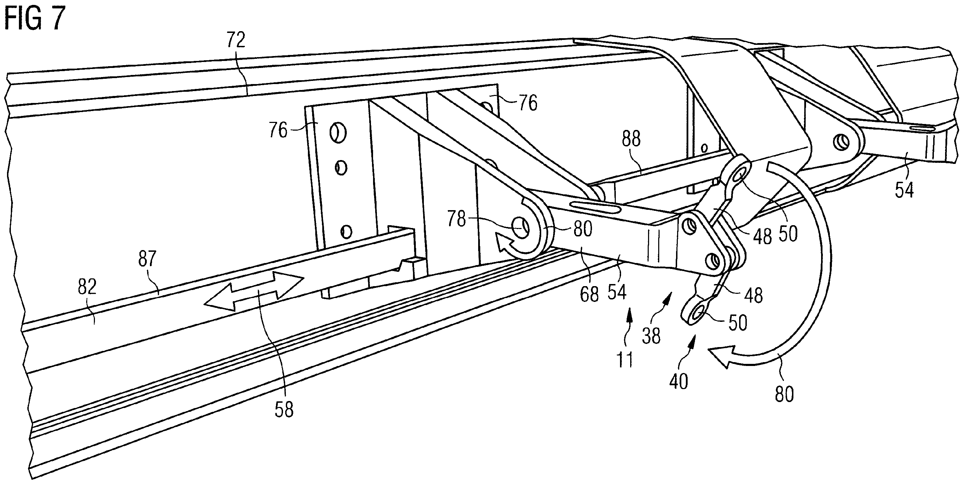

Wie am besten aus Fig. 7 ersichtlich, kann so die Antriebsstange 82 zu mehreren Haupthebeln 54 geführt werden und somit mehrere Haupthebel 54 gemeinsam antreiben.

Im Bereich der Befestigungsbeschläge 76 eines jeden Haupthebels weist die Antriebsstange 82 einen Gelenkanschluss 90 zum gelenkigen, d.h. z.B. drehbaren, Anlenken eines ersten Endes des Umsetzhebels 64 auf. In einer Ausführungsform ist das durch den Gelenkanschluss 90 gebildete Gelenk zwischen Umsetzhebel 64 und Antriebsstange 82 ein Mehrachsengelenk, um einerseits eine Verdrehung des Umsetzhebels 64 in einer in Linearbewegungsrichtung 58 und in vertikaler Richtung ausgerichteten Ebene zu ermöglichen und außerdem ein Vorschwenken des Umsetzhebels 64 nach vorne, d.h. zu der zu verformenden Haut hin zu ermöglichen, um so die Bewegung des ersten Armes 66 des Haupthebels 54 auszugleichen. Hierzu kann der Gelenkanschluss 90 z.B. ein Teil eines Kreuzgelenks oder eines Kugelgelenks sein. Mit einem entsprechenden Gelenk mit mehreren Freiheitsgraden ist das zweite Ende des Umsetzhebels 64 an dem ersten Arm 66 angelenkt.

In einer weiteren, hier nicht näher dargestellten Ausführungsform ist das Gelenk am Gelenkanschluss 90 ein reines Scharniergelenk mit nur einem Freiheitsgrad, und die Antriebsstange 82 ist um ihre Längsachse drehbar gelagert.

### Bezugszeichenliste:

- 10: adaptive Struktur
- 11: Antriebsmechanismus
- 12: verformbares Strukturbauteil
- 14: aerodynamischer Strömungskörper (Beispiel für einen fluiddynamischen Strömungskörper)
- 16: zu verformende Haut
- 18: Versteifungsprofil
- 20: Luftfahrzeug
- 22: Flugzeug
- 24: Flügel
- 26: Droopnose-Auftriebshilfe
- 28: zu verformende Primärstruktur
- 30: Hilfsstruktur
- 32: Omegastringer
- 34: Oberfläche
- 36: Aktuator
- 38: Lasteinleitungseinrichtung
- 40: Lasteinleitungselement
- 42: Angriffspunkt
- 44: Stellmotor
- 48: Streben
- 50: Gelenkkopf
- 52: Beschlag
- 54: Haupthebel
- 58: Linearbewegungsrichtung (Richtung der Linearbewegung)
- 60: Linearbewegungseinheit
- 62: Getriebeelement
- 64: Umsetzhebel
- 66: erster Arm
- 68: zweiter Arm
- 70: Übergangsbereich
- 72: Wandung
- 74: Flügelvorderkante
- 76: Befestigungsbeschlag
- 78: Drehachse
- 80: rotatorische Drehbewegung
- 82: Antriebsstange
- 84: Aktuatoranschluss
- 86: Führungsschiene
- 87: Stangenelement
- 88: Stangenelement
- 89: Koppelgelenk
- 90: Gelenkanschluss

## Patentansprüche

1. Verformbares Strukturbauteil (12) für einen fluiddynamischen Körper (14) eines Fahrzeugs (20), umfassend eine zu verformende Haut (16), einen Antriebsmechanismus (11) zum Erzeugen einer Verformungskraft und eine drehbeweglich gelagerte Lasteinleitungseinrichtung (38) zur Einleitung der Verformungskraft in die Haut, wobei der Antriebsmechanismus eine linear beweglich angetriebene Linearbewegungseinheit (60) und ein Getriebeelement (62) zum Umsetzen einer Linearbewegung der Linearbewegungseinheit (60) in eine Drehbewegung der Lasteinleiteinrichtung (38) aufweist, wobei das Getriebeelement (62) einen Umsetzhebel (64) aufweist, der zum Umsetzen der Linearbewegung in eine rotatorische Bewegung (80) an der Linearbewegungseinheit (60) und an der Lasteinleiteinrichtung (38) angelenkt ist, wobei der Umsetzhebel (64) gelenkig so gelagert ist, dass er sich sowohl in einer Ebene bewegen kann als auch sich aus der Ebene heraus bewegen kann, indem er an der Lasteinleitungseinrichtung (38) mit mehreren Freiheitsgraden oder mehrachsig gelenkig gelagert ist,
**dadurch gekennzeichnet,**
**dass** der Umsetzhebel (64) entweder
a) an der Linearbewegungseinheit (60) mit mehreren Freiheitsgraden oder mehrachsig gelenkig gelagert ist oder
b) an der Linearbewegungseinheit (60) einachsig gelenkig gelagert ist und die Linearbewegungseinheit (60) um eine im Wesentlichen in Bewegungsrichtung des Linearbewegungseinheit (60) verlaufende Verdrehachse drehbar gelagert ist.

2. Strukturbauteil (12) nach Anspruch 1,
**dadurch gekennzeichnet,**
**dass** der Umsetzhebel (64) als Teil eines Kniehebelmechanismus ausgebildet ist.

3. Strukturbauteil (12) nach einem der voranstehenden Ansprüche,
**dadurch gekennzeichnet,**
**dass** die Linearbewegungseinheit (60) derart ausgebildet und angeordnet ist, dass die Bewegungsrichtung der Linearbewegungseinheit (60) zumindest mit einer Bewegungsrichtungskomponente, vorzugsweise mit ihrer größten Bewegungsrichtungskomponente oder insgesamt parallel zu einer Drehachse (78) der Drehbewegung der Lasteinleiteinrichtung (38) verläuft.

4. Strukturbauteil (12) nach einem der voranstehenden Ansprüche,
**dadurch gekennzeichnet,**
**dass** die Linearbewegungseinheit (60) eine in ihrer Längsrichtung verschiebbar gelagerte Antriebsstange (82) aufweist.

5. Strukturbauteil (12) nach einem der voranstehenden Ansprüche,
**dadurch gekennzeichnet,**
**dass** die Linearbewegungseinheit (60) mehrere in Bewegungsrichtung aufeinanderfolgende gelenkig aneinander gekoppelte Stangenelemente (87, 88) aufweist.

6. Strukturbauteil (12) nach einem der voranstehenden Ansprüche,
**dadurch gekennzeichnet,**
**dass** die Haut an ihren Endbereichen ortsfest befestigt ist und der Antriebsmechanismus (11) dazu ausgebildet ist, einen zwischen den Endbereichen gekrümmt verlaufenden Mittelbereich der Haut zu verformen.

7. Fluiddynamischer Strömungskörper (14), bei dem ein Endkantenbereich durch ein verformbares Strukturbauteil (12) nach einem der voranstehenden Ansprüche gebildet ist.

8. Als Droopnose-Vorrichtung ausgebildete Auftriebshilfe (26) für ein Flugzeug (22), umfassend ein verformbares Strukturbauteil (12) nach einem der Ansprüche 1 bis 6.

## Claims

1. Deformable structural component (12) for a fluid-dynamic body (14) of a vehicle (20), comprising a skin (16) to be deformed, a drive mechanism (11) for producing a deformation force, and a rotatably mounted load introduction device (38) for introducing the deformation force into the skin, wherein the drive mechanism has a linearly movably driven linear movement unit (60) and a transmission element (62) for converting a linear movement of the linear movement unit (60) into a rotary movement of the load introduction device (38), wherein the transmission element (62) has a conversion lever (64) which, to convert the linear movement into a rotatory movement (80), is articulated on the linear movement unit (60) and on the load introduction device (38), wherein the conversion lever (64) is mounted in an articulated manner in such a way that it can move both in a plane and can move out of the plane in that it is mounted on the load introduction device (38) with a plurality of degrees of freedom or in a multiaxially articulated manner,
**characterized**
**in that** the conversion lever (64) is either
a) mounted on the linear movement unit (60) with a plurality of degrees of freedom or in a multiaxially articulated manner, or is
b) mounted on the linear movement unit (60) in a uniaxially articulated manner and the linear movement unit (60) is mounted so as to be rotatable about an axis of rotation extending substantially in the movement direction of the linear movement unit (60).

2. Structural component (12) according to Claim 1, **characterized**
**in that** the conversion lever (64) is formed as part of a toggle lever mechanism.

3. Structural component (12) according to one of the preceding claims,
**characterized**
**in that** the linear movement unit (60) is designed and arranged in such a way that the movement direction of the linear movement unit (60) extends, at least with one movement direction component, preferably with its greatest movement direction component or overall, parallel to an axis of rotation (78) of the rotary movement of the load introduction device (38).

4. Structural component (12) according to one of the preceding claims,
**characterized**
**in that** the linear movement unit (60) has a drive rod (82) which is mounted so as to be displaceable in its longitudinal direction.

5. Structural component (12) according to one of the preceding claims,
**characterized**
**in that** the linear movement unit (60) has a plurality of rod elements (87, 88) coupled to one another in an articulated manner which follow one another in the movement direction.

6. Structural component (12) according to one of the preceding claims,
**characterized**
**in that** the skin is fastened in a positionally fixed manner at its end regions, and the drive mechanism (11) is designed to deform a central region of the skin that extends in a curved manner between the end regions.

7. Fluid-dynamic flow body (14) in which an end edge region is formed by a deformable structural component (12) according to one of the preceding claims.

8. Lift aid (26) for an aeroplane (22) that is designed as a droop nose device, comprising a deformable structural component (12) according to one of Claims 1 to 6.

## Revendications

1. Composant structurel déformable (12) destiné à un organe fluidodynamique (14) d'un véhicule (20), comprenant une enveloppe (16) à former, un mécanisme d'entraînement (11) destiné à générer une force de déformation et un système d'introduction de charges (38) logé de manière déplaçable en rotation, destiné à introduire la force de déformation dans l'enveloppe, le mécanisme d'entraînement comportant un ensemble de déplacement linéaire (60), entraîné en déplacement linéaire et un élément de transmission (62) destiné à convertir un déplacement linéaire de l'ensemble de déplacement linéaire (60) en un déplacement en rotation du système d'introduction de charge (38), l'élément de transmission (62) comportant un levier de conversion (64), qui pour convertir le déplacement linéaire en un déplacement en rotation (80) est articulé sur l'ensemble de déplacement linéaire (60) et sur le système d'introduction de charge (38), le levier de conversion (64) étant logé de manière articulée de sorte à pouvoir se déplacer aussi bien dans un plan qu'à pouvoir se déplacer également hors du plan en ce qu'il est logé de manière articulée sur le système d'introduction de charges (38) avec plusieurs niveaux de liberté ou sur plusieurs axes,
**caractérisé en ce que** le levier de conversion (64) est logé soit
a) de manière articulée sur l'ensemble de déplacement linéaire (60) avec plusieurs niveaux de liberté ou sur plusieurs axes ou
b) par un axe, de manière articulée sur l'ensemble de déplacement linéaire (60) et l'ensemble de déplacement linéaire (60) est logé de manière rotative autour d'un axe de rotation s'écoulant sensiblement dans la direction de déplacement de l'ensemble de déplacement linéaire (60).

2. Composant structurel (12) selon la revendication 1, **caractérisé en ce que** le levier de conversion (64) est conçu en tant qu'une pièce d'un mécanisme à genouillère.

3. Composant structurel (12) selon l'une quelconque des revendications précédentes, **caractérisé en ce que** l'ensemble de déplacement linéaire (60) est conçu et placé de telle sorte que la direction de déplacement de l'ensemble de déplacement linéaire (60) s'écoule au moins par une composante de direction de déplacement, de préférence par sa plus grande composante de direction de déplacement ou globalement à la parallèle d'un axe de rotation (78) du déplacement en rotation du système d'introduction de charge (38).

4. Composant structurel (12) selon l'une quelconque des revendications précédentes, **caractérisé en ce que** l'ensemble de déplacement linéaire (60) comporte une tige d'entraînement (82) logée en étant déplaçable dans sa direction longitudinale.

5. Composant structurel (12) selon l'une quelconque des revendications précédentes, **caractérisé en ce que** l'ensemble de déplacement linéaire (60) comporte plusieurs éléments en tige (87, 88) successifs dans la direction de déplacement, accouplés les uns aux autres.

6. Composant structurel (12) selon l'une quelconque des revendications précédentes, **caractérisé en ce que** l'enveloppe est fixée de manière stationnaire par ses zones d'extrémité et le mécanisme d'entraînement (11) est conçu de sorte à déformer une zone médiane s'écoulant sous forme curviligne entre les zones d'extrémité.

7. Organe d'écoulement (14) fluidodynamique sur lequel une zone d'arête extrême est formée d'un composant structurel (12) selon l'une quelconque des revendications précédentes.

8. Dispositif hypersustentateur (26) conçu sous la forme d'un nez basculant, destiné à un avion (22), comportant un composant structurel (12) déformable selon l'une quelconque des revendications 1 à 6.
